# EUROPÄISCHE PATENTSCHRIFT

(11) **EP 0 691 774 B1**
(45) Veröffentlichungstag und Bekanntmachung des Hinweises auf die Patenterteilung: **12.11.2003**
(21) Anmeldenummer: 95109954.8
(22) Anmeldetag: 26.06.1995
(51) Int. Cl.: H04M 1/72, H04Q 7/32

(54) **Funksprechgerät mit einem austauschbaren Element zur Programmspeicherung zusätzlich zu einer SIM Karte**
Mobile phone with an exchangable element for program storage in addition to a SIM card
Radiotéléphone avec un element interchangeable pour le mémorisation de programmes en plus d'une carte SIM

(30) Priorität: 08.07.1994 DE 9411103 U
(43) Veröffentlichungstag der Anmeldung: 10.01.1996
(73) Patentinhaber: SIEMENS AKTIENGESELLSCHAFT, 80333 München (DE)
(72) Erfinder: Zibert, Klaus, Dr.-Ing., D-83607 Holzkirchen (DE)

(56) Entgegenhaltungen:
- EP-A- 0 522 762
- DE-A- 3 721 360
- GB-A- 2 270 442

## Beschreibung

Die Neuerung bezieht sich auf ein Funksprechgerät zur Verwendung in einem Funknetz, insbesondere Mobilfunkgerät und Schnurlostelefon, mit Sende-/Empfangs- und Steuereinrichtungen.

Es ist derzeit üblich, daß zum Einspielen einer neuen Software das Mobiltelefon zum Händler oder Servicezentrum des Geräteherstellers gebracht wird. Dort wird das Gerät an ein Programmiergerät angeschlossen und so eine neue Software in die im Mobiltelefon enthaltenen Flash Proms oder sonstige nichtflüchtige Speicher programmiert.

Das Dokument GB-A-2 270 442 beschreibt ein Funksprechgerät mit einer Speicherkarte, die im Gerät austauschbar angeordnet ist, und die auch zur Programmierung des Funksprechgeräts dient.

EP-0 522 762 A2 beschreibt ein mobiles Telefon mit einer Smart-Card, die unterhalb einer Batterieeinheit angeordnet ist.

Der Neuerung liegt die Aufgabe zugrunde, eine Lösung zum einfachen Eingeben einer neuen Software in ein Funksprechgerät zu schaffen.

Diese Aufgabe wird gemäß der Neuerung gelöst durch ein Element zur Programmspeicherung, das im Gerät austauschbar angeordnet ist, wobei das Gerät die Merkmale des Anspruchs 1 aufweist.

Diese Ausgestaltung ermöglicht eine Programmspeicherung mit geringem Aufwand, die veränderbar und nachladbar ist. Veränderungen können auch am ausgelieferten Gerät, also beim Kunden mit minimalem logistischem Aufwand und zu geringsten Kosten erfolgen.

Vorteilhafte Ausgestaltungen und Weiterbildungen des Gegenstandes der Neuerung sind in den Unteransprüchen angegeben.

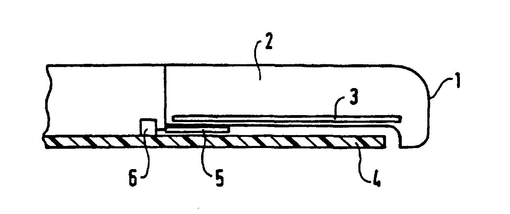

Nachstehend wird die Neuerung anhand eines in der Zeichnung dargestellten Ausführungsbeispiels näher erläutert.

In der Figur ist in einer Teildarstellung eines Funksprechgerätes der rückwärtige Bereich gezeigt, in dem sich in einem abnehmbaren oder schwenkbar ausgebildeten Gehäuseteil 1 eine Akku-Aufnahme 2 befindet. Dieses Gehäuseteil 1 besitzt an seiner Innenfläche eine Aufnahme für eine Karte 3 (SIM), die zur Benutzung des Gerätes eingelegt wird. Dabei erfolgt eine Kontaktierung mit Kontaktelementen, die auf einer Schaltungsteile des Gerätes tragenden Leiterplatte 4 angeordnet sind. Im Bereich unterhalb des Gehäuseteils 1 für die Akku-Aufnahme 2 ist auf der Leiterplatte 4 ein Stecker 6 angebracht für die Kontaktierung einer Chipkarte mit einem Programmierungs-ROM. In einem solchen einfachen und billigen ROM oder einem anderen Speichermedium ist die Programmspeicherung eingebettet. Sie kann auch vom Kunden im Gerät ausgewechselt werden. Dabei kann der Austausch der Chipkarte für eine Neuprogrammierung oder Umprogrammierung des Gerätes mit Briefpost über die Service Provider direkt an den Kunden erfolgen.

Im Ausführungsbeispiel ist die Chipkarte 5 steckbar unter dem Gehäuseteil 1 für die Akku-Aufnahme 2 angeordnet, wodurch sie gut zugänglich ist und zugleich auch ein ESD-Schutz besteht. Selbstverständlich kann man eine solche Chipkarte für die Programmspeicherung auch in einem anderen Bereich des Funksprechgerätes anordnen. Dies hängt von der jeweiligen Ausgestaltung des Funksprechgerätes ab, an welcher Stelle sich die optimale Lage für den Chip befindet.

## Patentansprüche

1. Funksprechgerät zur Verwendung in einem Funknetz mit Sende-/Empfangs- und Steuereinrichtungen mit folgenden Merkmalen:
a) einem ersten - der Identifizierung oder Authentifizierung des Kunden dienenden - elektronischen Bauelement (3), das zur Benutzung des Gerätes eingelegt wird und dessen Kontaktierung mit Kontaktelementen erfolgt, die auf einer Schaltungsteile des Gerätes tragenden Leiterplatte (4) angeordnet sind;
b) einem zweiten - auch vom Kunden - auswechselbaren elektronischen Bauelement (5), dessen Kontaktierung über einen auf der Leiterplatte (4) angebrachten Stecker (6) erfolgt;
c) beide Bauelemente sind räumlich zwischen der Leiterplatte (4) und einem abnehmbar oder schwenkbar ausgebildeten Gehäuseteil (1) des Funksprechgeräts angeordnet, in dem sich eine Akku-Aufnahme (2) befindet.

2. Funksprechgerät nach Anspruch 1, bei dem das zweite Bauelement (5) eine Speichereinrichtung umfaßt, in welcher ein Programm für eine Steuereinrichtung des Funksprechgerätes abgespeichert ist.

3. Funksprechgerät nach einem der vorhergehenden Ansprüche, bei dem das zweite Bauelement (5) eine Chipkarte mit einem ROM ist.

4. Funksprechgerät nach einem der vorhergehenden Ansprüche, bei dem das erste Bauelement (3) eine Chipkarte mit einem sogenannten Teilnehmer-Identitäts-Modul bzw. Subscriber Identity Module SIM ist.

## Claims

1. Mobile telephone for use in a radio network having transmitting/receiving and control devices with the following features:
a) a first electronic component (3) which is used for identification or authentication of the customer, is inserted in order to use the appliance and makes contact with contact elements which are arranged on a printed circuit board (4) which is fitted with circuit parts of the appliance;
b) a second electronic component (5) which is replaceable - even by the customer - and with which contact is made via a plug (6) which is fitted to the printed circuit board (4);
c) both components are physically arranged between the printed circuit board (4) and a housing part (1) (which is designed such that it can removed or pivoted) of the mobile telephone and in which a rechargeable battery holder (2) is located.

2. Mobile telephone according to Claim 1, in which the second component (5) has a memory device in which a program for a control device for the mobile telephone is stored.

3. Mobile telephone according to one of the preceding claims, in which the second component (5) is a smart card with a ROM.

4. Mobile telephone according to one of the preceding claims, in which the first component (3) is a smart card with what is referred to as a subscriber identity module SIM.

## Revendications

1. Radiotéléphone destiné à être utilisé dans un réseau radio avec des dispositifs émetteurs et récepteurs et des dispositifs de commande, présentant les caractéristiques suivantes:
a) un premier composant électronique (3) servant à l'identification ou à l'authentification du client, lequel est introduit pour utiliser l'appareil et est mis en contact avec des éléments de contact disposés sur une plaquette à circuits imprimés (4) portant des composants de circuits de l'appareil;
b) un deuxième composant électronique (5) pouvant être remplacé, y compris par le client, et dont la mise en contact s'effectue par l'intermédiaire d'un connecteur (6) situé sur la plaquette à circuits imprimés (4);
c) les deux composants sont situés spatialement entre la plaquette à circuits imprimés (4) et une partie de boîtier (1) du radiotéléphone détachable ou pouvant pivoter et dans laquelle se trouve un logement pour accumulateur (2).

2. Radiotéléphone selon la revendication 1, dans lequel le deuxième composant (5) comprend un dispositif de mémoire dans lequel est mis en mémoire un programme pour un dispositif de commande du radiotéléphone.

3. Radiotéléphone selon l'une des revendications précédentes, dans lequel le deuxième composant (5) est une carte à puce avec une ROM.

4. Radiotéléphone selon l'une des revendications précédentes, dans lequel le premier composant (3) est une carte à puce avec ce qu'on appelle un module d'identité d'abonné resp. un «Subscriber Identity Module» SIM.
